# EUROPEAN PATENT APPLICATION

(11) **EP 4 472 343 A1**
(43) Date of publication of application: **04.12.2024**
(21) Application number: 22923975.1
(22) Date of filing: 19.08.2022
(51) Int. Cl.: H04W 88/08, H04W 36/00, H04W 74/08, H04W 76/11

(54) **BASE STATION SYSTEM, UNIT AND CONTROL DEVICE OF SAID BASE STATION SYSTEM, METHOD PERFORMED BY SAID BASE STATION SYSTEM, AND COMPUTER-READABLE STORAGE MEDIUM**

(30) Priority: 26.01.2022 JP 2022010344
(71) Applicant: KDDI Research, Inc., Fujimino-shi, Saitama 356-8502 (JP)
(72) Inventor: TSUKAMOTO, Yuu, Fujimino-shi, Saitama 356-8502 (JP); SHINBO, Hiroyuki, Fujimino-shi, Saitama 356-8502 (JP)
(74) Representative: Mathys & Squire
(86) International application number: PCT/JP2022/031447
(87) International publication number: WO 2023/145113

(57) **Abstract**

A base station system includes: a first unit having a function of processing a radio signal, and a plurality of second units each having a function of a higher layer than the function of the first unit, one of the plurality of second units is an initial unit that executes random access processing for a user equipment, the initial unit includes: setting means for setting a communication connection to the user equipment upon receiving, from the user equipment, a communication request that includes identification information indicating a first network slice, determination means for determining a providing unit that provides the first network slice from among the plurality of second units, and processing means for executing processing for performing a handover of the communication connection to the providing unit when the initial unit and the providing unit are different from each other.

## Description

### TECHNICAL FIELD

The present disclosure relates to a base station system constituted by a plurality of units that can be dispersedly disposed at different geographical positions.

### BACKGROUND ART

Heretofore, base station apparatuses for mobile communication networks (hereinafter, simply referred to as "base stations") have been installed at antenna sites where an antenna is installed, and each such apparatus has performed various types of processing for transmitting user data as a radio signal. In contrast, in recent years, functions of a base station have been divided, and apparatuses (units) that realize the divided functions have been disposed at different sites.
Hereinafter, a base station constituted by a plurality of units, which can be arranged at different geographical positions, is referenced as a base station system. The third generation partnership project (3GPP) has proposed that base station functions be split between a CU (central unit), a DU (distributed unit), and an RU (radio unit), for example. Note that, for example, the CU performs processing related to an SDAP and PDCP layers, the DU performs processing related to a RLC, MAC, and a portion of physical layers, and the RU performs remaining processing of the physical layer that includes processing for transmitting/receiving a radio signal via an antenna.

PTL1 discloses a base station system in which a plurality of sets of DUs and CUs are connected to one RU. In the following description, the base station system that is disclosed in PTL 1 and in which a plurality of sets of DUs and CUs are connected to one RU is referred to as a "multi-connection base station system". According to PTL 1, the DU in one set is disposed at an antenna site, and the CU in the set is disposed in a data center. In addition, the DU in another set is disposed at the antenna site, and the CU in the set is disposed in a local station. Note that the antenna site is a site where the RU is disposed, and the local station is a site where delay in communication with the antenna site is smaller than that of the data center. Furthermore, according to PTL 1, both the DU and the CU in the other set are disposed in the local station. Note that the arrangement pattern of these units is exemplary, and arrangement of the DU and the CU in each set is determined in accordance with a network slice provided by the set, for example.

### CITATION LIST

### PATENT LITERATURE

PTL1: Japanese Patent Laid-Open No. 2020-136787

### SUMMARY OF INVENTION

### TECHNICAL PROBLEM

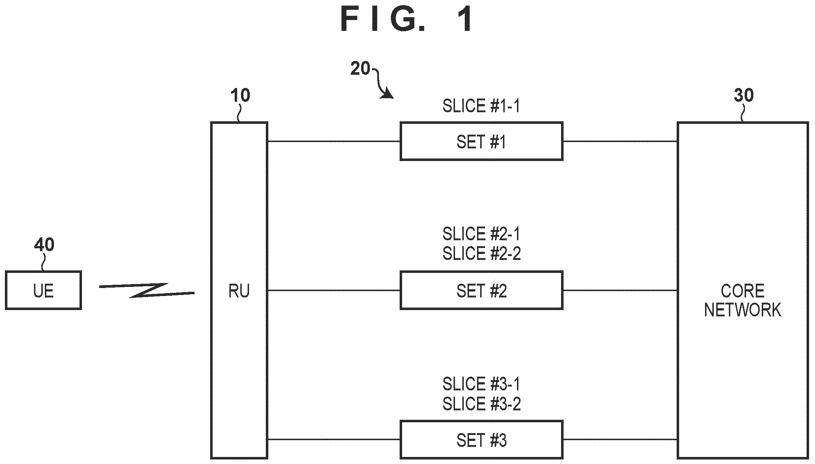

FIG. 1 shows a base station system disclosed in PTL 1. As shown in FIG. 1, sets 20 of DUs and CUs are connected to one RU 10. The sets 20 are connected to a core network 30. In the following description, when distinguishing three sets 20 from each other, the three sets 20 are referred to as a "set #1", a "set #2", and a "set #3". As shown in FIG. 1, the set #1 provides a network slice #1-1 (hereinafter, a network slice is simply referred to as a "slice"), the set #2 provides slices #2-1 and #2-2, and the set #3 provides slices #3-1 and #3-2. Note that sites where the DU and the CU of the set #1, the set #2, and the set #3 are disposed are determined in accordance with slices provided by the corresponding sets 20, for example.

In the configuration in FIG. 1, when an application of a user equipment (UE) 40 uses the slice #3-2, the UE 40 needs to execute a random access procedure for the set #3, and establish a protocol data unit (PDU) session that is made via the set #3. However, a procedure in which the UE 40 selects a set, for which a random access procedure is to be executed, from the plurality of sets 20 connected to the one RU is not specified. Specifically, the UE 40 cannot establish a PDU session that is made via the set #3 that provides the slice #3-2 desired to be used, and thus cannot receive a service that is provided the slice #3-2.

Note that, a similar problem can also occur in a case where, when functions of a base station apparatus are divided between a first unit having a function of processing a radio signal and second units each having a function of a higher layer than the function of the first unit, and the plurality of second units are connected to the one first unit instead of dividing functions of the base station apparatus between an RU, a DU and a CU. That is to say, the UE 40 cannot designate a second unit that provides a slice that the UE 40 desires to use, in other words, a slice selected by the UE 40, and execute random access, and thus cannot receive a service that is provided by the slice.

### SOLUTION TO PROBLEM

According to an aspect of the present invention, a base station system includes: a first unit having a function of processing a radio signal, and a plurality of second units each having a function of a higher layer than the function of the first unit, each of the plurality of second units provides one or more network slices, one of the plurality of second units is an initial unit that executes random access processing for a user equipment, the initial unit includes: setting means for setting a communication connection to the user equipment upon receiving, from the user equipment, a communication request that includes identification information indicating a first network slice, determination means for determining a providing unit that provides the first network slice from among the plurality of second units, and processing means for executing processing for performing a handover of the communication connection to the providing unit when the initial unit and the providing unit are different from each other.

According to the present invention, in a multi-connection base station system, it is possible to allow a user equipment to receive a service that is provided by a network slice selected by the user equipment.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

FIG. 1 is a diagram of a configuration of a background art.
FIG. 2 is a diagram of a configuration of a base station system according to an embodiment.
FIG. 3 is a diagram showing an example of information held by a control apparatus.
FIG. 4 is a sequence diagram according to an embodiment.
FIG. 5 is a diagram of a configuration of an initial unit according to an embodiment.
FIG. 6 is a diagram of a configuration of the control apparatus according to an embodiment.

### DESCRIPTION OF EMBODIMENTS

Hereinafter, an embodiment will be described in detail with reference to the attached drawings. Note that the following embodiment is not intended to limit the scope of the claimed invention, and all the combinations of features described in the embodiment are not essential to the invention. Two or more of the features described in the embodiment may be combined as appropriate. In addition, the same reference numerals are given to the same or similar configurations, and a redundant description thereof is omitted.

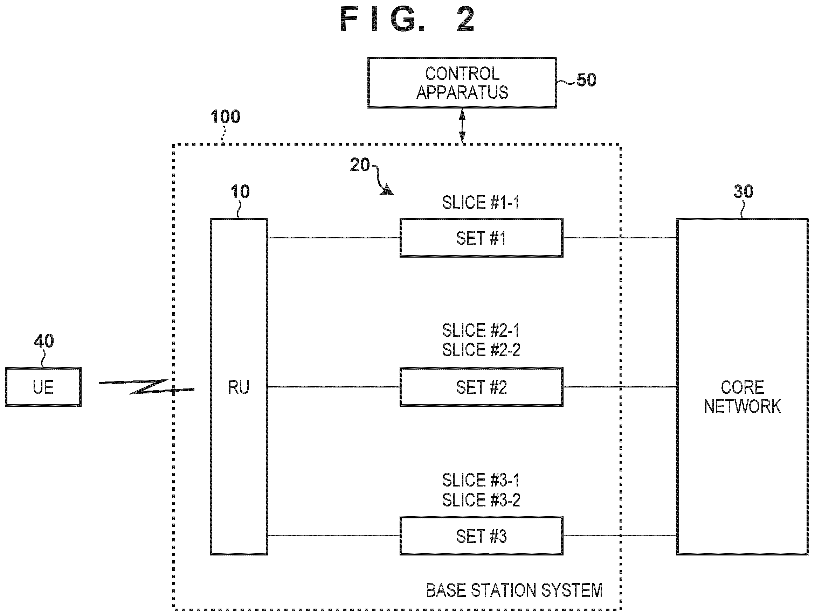

FIG. 2 is a diagram of a configuration of a radio access network (RAN) that includes a base station system 100 according to the present embodiment. Note that a detailed description of constituent elements similar to those in FIG. 1 is omitted. Also in FIG. 2, the base station system 100 includes one RU 10 and three sets 20 connected to the RU 10. Note that each set 20 includes one DU and one CU. DUs and CUs can be divided into a user plane function (UPF) for transferring data and a control plane function (CPF) for transmitting/receiving a control signal to/from another apparatus and controlling the UPF. The sets 20 shown in FIG. 2 include both the UPF and the CPF of DUs and CUs.

Similarly to FIG. 1, a set #1 provides a slice #1-1, a set #2 provides slices #2-1 and #2-2, and a set #3 provides slices #3-1 and #3-2. Note that the number of slices that are provided by each set 20 can be any number that is one or greater. In addition, in FIG. 2, the number of sets 20 is three, but the number of sets 20 can be any number that is two or greater. That is to say, the present invention can be applied to a configuration of the base station system 100 in which a plurality of sets 20 are connected to one RU. Note that radio resources of a radio section are allocated to the sets 20. Note that allocation of radio resources to the sets 20 may be static or dynamic.

In FIG. 2, a control apparatus 50 is a control apparatus for a RAN. The control apparatus 50 can be, for example, a near realtime RAN intelligent controller (Near-RT RIC) specified by the open RAN (O-RAN) alliance.

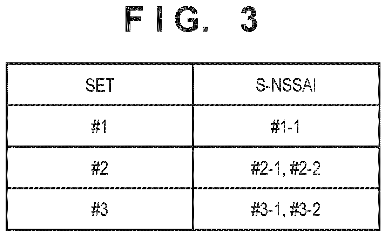

The control apparatus 50 holds determination information shown in FIG. 3. The determination information is information for determining slices that are provided by the sets 20. Note that S-NSSAI (single network slice selection assistance information) is identification information for specifying/identifying slices. In this example, S-NSSAI of a slice #m-k is denoted by #m-k. The determination information shown in FIG. 3 indicates that the set #1 provides the slice #1-1, the set #2 provides the slices #2-1 and #2-2, and the set #3 provides the slices #3-1 and #3-2. Each set 20 can be configured to notify the control apparatus 50 of S-NSSAI of a slice that is provided by the set 20 along with an identifier of the set 20, after being started, for example. Note that the identifier of the set 20 can be a pair of identifiers of the DU and the CU of the set 20.

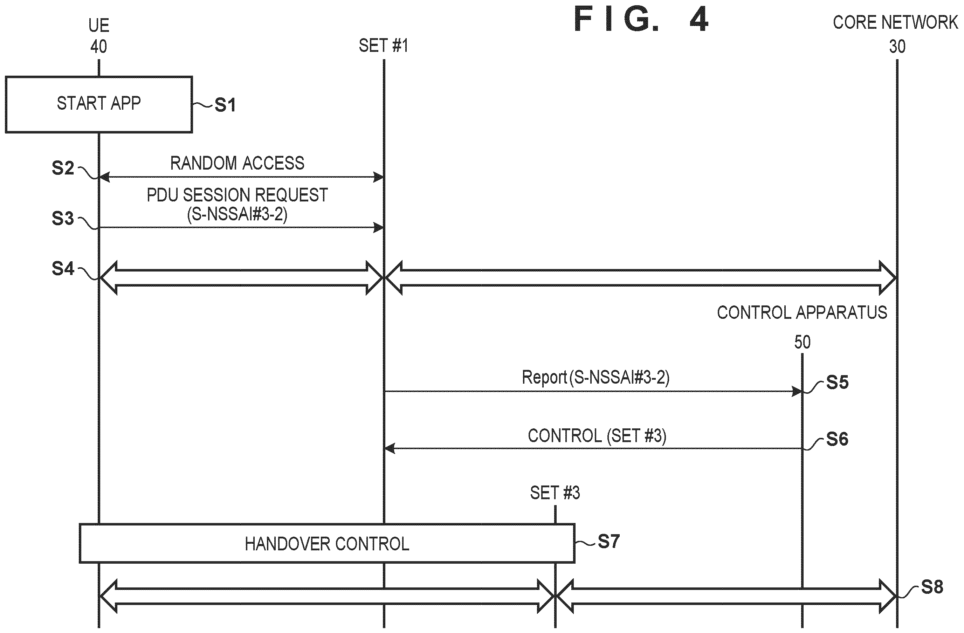

FIG. 4 is a sequence diagram of the present embodiment. In step S1, an application is started in the UE 40. Note that this application uses the slice #3-2. In step S2, the UE 40 executes random access. In the present embodiment, the base station system 100 is configured such that, since radio resources for a random access are allocated only to the set #1, a set 20, to which the UE 40 performs a random access, is always the set #1. The base station system 100 can be configured, for example, such that a random access channel dedicated for a random access is allocated only to the set #1, and a signal that is transmitted by the UE 40 using the random access channel is always transferred to the set #1. Note that the order of steps S1 and S2 may be reversed.

In step S3, when the random access is completed, the UE 40 transmits a request message requesting for establishment of a PDU session, to the set #1 to which the random access has been performed. The request message includes identification information for identifying a slice desired to be used, which is, in this example, S-NSSAI#3-2. The request message is transferred from the set #1 to an access and mobility management function (AMF) of the core network 30, and, accordingly, a PDU session from the UE 40 to a connection point between the core network 30 and an external network (for example, the Internet) is established in step S4. This PDU session includes a sub session between the UE 40 and the set #1 and at least one sub session from the set #1 to the external network. Note that the sub sessions are also referenced as PDU sessions.

When a PDU session is established, the CPF of the CU of the set #1 transmits a report message to the control apparatus 50 in step S5. The report message includes the identification information of the slice included in the request message, in other words, S-NSSAI#3-2. A report function specified in RAN parameters for report service in section 8.2 of O-RAN. WG3. E2SM-RC-v01.00 can be used for the report message, for example.

Upon receiving the report message, the control apparatus 50 references the determination information, and determines a set 20 that provides a slice indicated by the identification information of the slice included in the report message. As shown in FIG. 3, the slice #3-2 corresponding to S-NSSAI#3-2 is provided by the set #3. In step S6, the control apparatus 50 transmits a control message to the set #1 in response to the report message. The control message includes the determined set 20, which is, in this example, information indicating the set #3. Note that the control message can be implemented by correcting a control function specified in control service style3: Connected Mode Mobility in section 7. 6. 4 of O-RAN. WG3. E2SM-RC-v01.00, for example.

Upon receiving the control message, the CPF of the CU of the set #1 starts processing for performing a handover of the PDU session set in step S4 to the set #3 included in the control message. An existing handover sequence can be used for the processing. Accordingly, the PDU session is changed to a session that is performed via the set #3.

Note that, in the present embodiment, the functions of the base station apparatus are divided between three units, namely an RU, a DU and a CU, and a set of one DU and one CU is defined as a set 20. However, the present invention can also be applied to a configuration in which the functions of the base station apparatus are divided between at least two units, namely a first unit and a second unit, and a plurality of second units are connected to one first unit. Note that the first unit is an RU, for example, and has at least a function of processing a radio signal via an antenna. In addition, the second units each have a function of a higher layer than the function of the first unit. The second units also have a function of performing random access processing. Note that a second unit can be further divided into two or more units (or subunits). The above embodiment illustrates an example in which each second unit is divided into two units, namely a DU and a CU, but a number of divisions can be three or more. Note that the first unit is disposed at the antenna site, and the plurality of second units connected to the first unit can be disposed at various sites. Furthermore, when a second unit is divided into a plurality of subunits, the plurality of subunits that constitute the second unit can be disposed at various sites.

To summarize the description above, the base station system 100 according to the present embodiment includes a first unit having a function of processing a radio signal, and a plurality of second units each having a function of a higher layer than the function of the first unit. Note that each of the plurality of second units provides one or more network slices. One of the plurality of second units is a unit for performing random access processing for the UE 40, and is also referred to as an "initial unit" hereinafter. Note that this can be realized by allocating, only to the initial unit, radio resources that are used only for a random access of a radio signal transmitted/received by the first unit, in other words, a random access channel. The UE 40 executes a random access to the initial unit irrespective of a slice desired to be used, requests for a PDU session from the initial unit when the random access is completed, and establishes a PDU session with the initial unit. Note that, at this time, the UE 40 transmits, to the initial unit, identification information of a slice that the UE 40 desires to use.

When a PDU session is established, the initial unit notifies the control apparatus 50 for the RAN of the identification information of the slice that the UE 40 desires to use, and obtains, from the control apparatus 50, information indicating a second unit that provides the slice. If the second unit (providing unit) that provides the slice is a second unit other than the initial unit, the initial unit starts a procedure for performing a handover of the established PDU session to the other second unit. With this configuration, in a "multi-connection base station system", it is possible to allow the UE 40 to receive a service provided by the slice selected by the UE 40.

Note that a configuration can be adopted in which processing of step S5 in FIG. 4 onward is executed only when the initial unit does not provide a slice corresponding to slice information included in a request message. That is to say, in this example, a configuration can also be adopted in which, when the slice information included in the request message is S-NSSAI#1-1, the set #1 that is an initial unit does not transmit a report message to the control apparatus 50.

Note that, in the above embodiment, a PDU session is referred to as such in accordance with the 3GPP terminology for new radio (NR) or 5G, but a PDU session corresponds to a bearer in Long Term Evolution or 4G. Here, the PDU session and the bearer are a communication connection that is set in a mobile communication network in order to transfer packets between a UE and an external network, such as the Internet, of a mobile communication network. Therefore, the PDU session and the bearer can also be collectively referred to as a communication connection.

In addition, the present invention is also applicable to a case where a network virtualization technique is applied to the base station system 100. That is to say, a second unit can be a virtual unit realized by a group of computers disposed at respective sites.

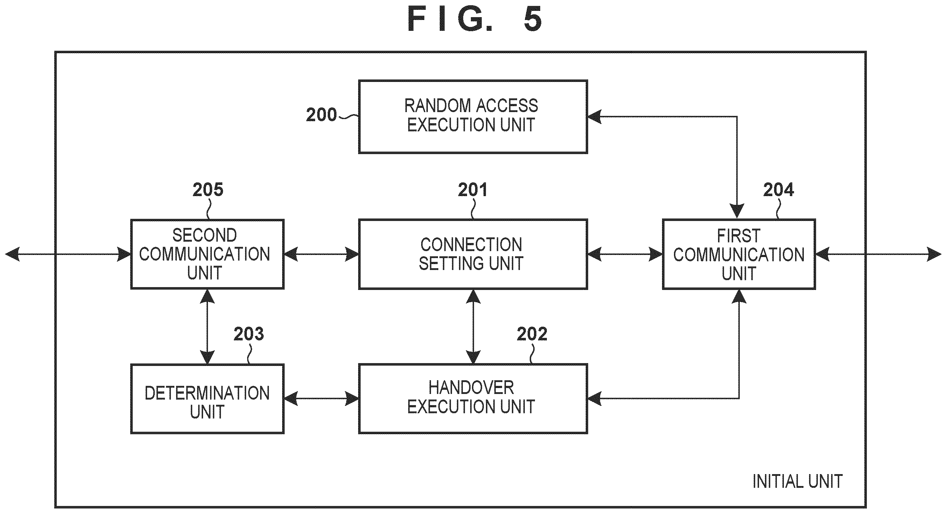

FIG. 5 is a diagram of a configuration of the initial unit. A first communication unit 204 is a communication interface to the RU 10 and another second unit, and a second communication unit 205 is a communication interface to the core network 30 and the control apparatus 50. Note that a configuration can also be adopted in which communication with the RU 10, another second unit, the core network 30, and the control apparatus 50 is performed using the same communication interface. In addition, a configuration can also be adopted in which communication with the RU 10, another second unit, the core network 30, and the control apparatus 50 is performed using individual communication interfaces. That is to say, a communications interface and a communication partner may have any relationship.

A random access execution unit 200 executes random access processing for the UE 40 via the first communication unit 204. A connection setting unit 201 sets a communication connection in accordance with a communication request from the UE 40. Note that the communication request corresponds to the PDU session request in step S3 in FIG. 3, and a communication connection corresponds to a PDU session.

Based on the identification information of a slice included in a communication request, a determination unit 203 determines a providing unit that is a second unit that provides a slice indicated by the identification information. As shown in FIG. 4, for example, the determination unit 203 can determine a providing unit by notifying the control apparatus 50 of the identification information of the slice included in the communication request via the second communication unit 205, and obtaining information indicating a providing unit from the control apparatus 50 in response to the notification.

Note that a configuration can also be adopted in which the determination information shown in FIG. 3 is stored in a storage device (not illustrated) of the initial unit. In this case, the initial unit can determine a providing unit based on the determination information stored in the storage device and the identification information of the slice included in the communication request. Note that the initial unit can obtain the determination information from the control apparatus 50. Alternatively, a configuration can be adopted in which the initial unit obtains the determination information by a second unit other than the initial unit notifying the initial unit of an identifier of a slice that is provided by the second unit.

If the providing unit is not the initial unit, a handover execution unit 202 executes processing for performing a handover of a communication connection to the providing unit via the first communication unit 204.

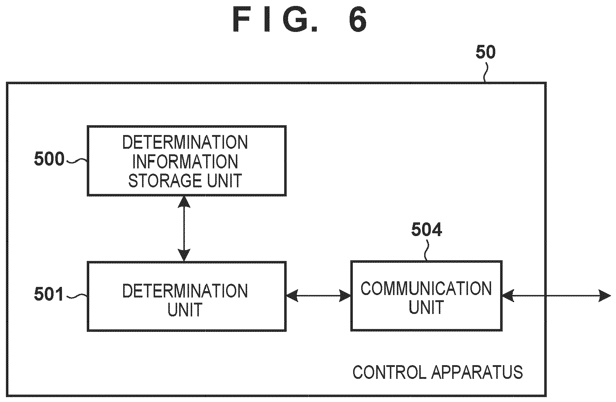

FIG. 6 is a diagram of a configuration of the control apparatus 50. A communication unit 504 performs processing for communicating with the base station system 100. A determination information storage unit 500 stores determination information. Upon receiving, from the initial unit, a message that includes identification information indicating a network slice, the communication unit 504 outputs the identification information to a determination unit 501. The determination unit 501 determines a providing unit that provides the network slice indicated by the identification information, based on the identification information and the determination information, and outputs a determination result to the communication unit 504. The communication unit 504 notifies the initial unit of the providing unit.

Furthermore, the control apparatus 50 and the base station system 100 according to the present disclosure can be realized by a computer program for causing an apparatus (for example, a computer) that has one or more processors to operate as the above control apparatus 50 and base station system 100 when executed by the one or more processor. Note that the computer program is stored in a non-transitory computer-readable storage medium such as one or more memories of the apparatus.

The invention is not limited to the foregoing embodiments, and various variations/changes are possible within the spirit of the invention.

This application claims priority from Japanese Patent Application No, 2022-010344 filed January 26, 2022, which is hereby incorporated by reference herein.

## Claims

1. A base station system comprising:
a first unit having a function of processing a radio signal; and a plurality of second units each having a function of a higher layer than the function of the first unit,
wherein each of the plurality of second units provides one or more network slices,
one of the plurality of second units is an initial unit that executes random access processing for a user equipment, and
the initial unit includes:
setting means for setting a communication connection to the user equipment upon receiving, from the user equipment, a communication request that includes identification information indicating a first network slice,
determination means for determining a providing unit that provides the first network slice from among the plurality of second units, and
processing means for executing processing for performing a handover of the communication connection to the providing unit when the initial unit and the providing unit are different from each other.

2. The base station system according to claim 1,
wherein radio resources dedicated to the random access within the radio signal that is processed by the first unit are allocated only to the initial unit.

3. The base station system according to claim 1 or 2, further comprising
holding means for holding determination information indicating network slices that are provided by the plurality of second units,
wherein the determination means determines the providing unit based on the identification information indicating the first network slice and the determination information.

4. The base station system according to claim 3,
wherein a second unit that is different from the initial unit and is among the plurality of second units is configured to notify the initial unit of the identification information of a network slice that is provided by the second unit.

5. The base station system according to claim 1 or 2, further comprising
communication means for communicating with a control apparatus that holds determination information indicating network slices that are provided by the plurality of second units,
wherein the determination means determines the providing unit by notifying the control apparatus of the identification information, and obtaining information indicating the providing unit from the control apparatus.

6. The base station system according to claim 5,
wherein the plurality of second units are configured to notify the control apparatus of the identification information of network slices that are provided by the second units.

7. The base station system according to any one of claims 1 to 6,
wherein each of the plurality of second units includes a third unit and a fourth unit that has a function of a higher layer than a function of the third unit.

8. The base station system according to claim 7,
wherein the first unit is a radio unit (RU), the third unit is a distributed unit (DU), and the fourth unit is a central unit (CU).

9. A unit in a base station system in which a plurality of units that each provide one or more network slices are connected to a radio unit that has a function of processing a radio signal, and the unit out of the plurality of units executes random access processing for a user equipment, the unit comprising:
setting means for setting a communication connection to the user equipment upon receiving, from the user equipment, a communication request that includes identification information indicating a first network slice;
determination means for determining a providing unit that provides the first network slice from among the plurality of units; and
processing means for executing processing for performing a handover of the communication connection to the providing unit when the providing unit is another unit among the plurality of units.

10. A control apparatus of a base station system that includes a first unit having a function of processing a radio signal and a plurality of second units each having a function of a higher layer than the function of the first unit,
wherein the plurality of second units each provide one or more network slices,
one of the plurality of second units is an initial unit that executes random access processing for a user equipment, and
the control apparatus includes:
holding means for holding determination information indicating network slices that are provided by the plurality of second units,
receiving means for receiving, from the initial unit, a message that includes identification information indicating a first network slice,
determination means for determining a providing unit that provides the first network slice from among the plurality of second units, based on the identification information and the determination information, and
notification means for notifying the initial unit of the providing unit.

11. A computer-readable storage medium storing a computer program that, when executed by one or more processors of an apparatus, causes the apparatus to function as the control apparatus according to claim 10.

12. A method performed by a base station system that includes a first unit having a function of processing a radio signal and a plurality of second units each having a function of a higher layer than the function of the first unit,
the plurality of second units each providing one or more network slices,
one of the plurality of second units being an initial unit that executes random access processing for a user equipment, and
the method comprising:
setting a communication connection between the initial unit and the user equipment in response to receiving, from the user equipment, a communication request that includes identification information indicating a first network slice;
determining a providing unit that provides the first network slice from among the plurality of second units; and
performing a handover of the communication connection to the providing unit when the initial unit and the providing unit are different from each other.

13. A computer-readable storage medium storing a computer program that, when executed by the one or more processors of an apparatus, causes the apparatus to perform the method according to claim 12.
